Europäisches Patentamt

European Patent Office

Office européen des brevets

(19)

(11) Numéro de publication: **0 378 954**
**A2**

(12) # DEMANDE DE BREVET EUROPEEN

(21) Numéro de dépôt: **89420521.0**

(22) Date de dépôt: **27.12.89**

(51) Int. Cl.5: **C08J 7/04, C09D 151/08,**
**G11B 5/704**

(30) Priorité: **28.12.88 FR 8817560**

(43) Date de publication de la demande:
**25.07.90 Bulletin 90/30**

(84) Etats contractants désignés:
**GR**

(71) Demandeur: **RHONE-POULENC FILMS**
**25, quai Paul Doumer**
**F-92408 Courbevoie(FR)**

(72) Inventeur: **Fiard, Jean-François**
**16, rue des Orteaux**
**F-75020 Paris(FR)**
Inventeur: **Fleury, Etienne**
**135 bis, rue de Montagny**
**F-69008 Lyon(FR)**
Inventeur: **Gerwig, Dominique**
**71, rue de la Plaine**
**F-01120 Montluel(FR)**
Inventeur: **Traversier, Sylvianne**
**41, Chemin du Bois Roux**
**F-69300 Caluire(FR)**
Inventeur: **Vovelle, Louis**
**85, Grande-Rue Croix Rousse**
**F-69004 Lyon(FR)**

(74) Mandataire: **Rioufrays, Roger et al**
**RHONE-POULENC CHIMIE Service Brevets**
**Chimie Centre de Recherches des Carrières**
**B.P. 62**
**F-69192 Saint-Fons Cédex(FR)**

(54) **Films polyester composites utilisables notamment comme supports pour matériaux d'enregistrement magnétique et matériaux d'enregistrement magnétique en résultant.**

(57) L'invention concerne un procédé d'obtention de films composites constitués par un film polyester support semi-cristallin exempt de charge et de rugosité Ra inférieure ou égale à 0,01 µm portant sur au moins une de ses faces un revêtement à base d'un polymère modifié obtenu par polymérisation d'un ou plusieurs monomères acryliques en présence d'un copolyester sulfoné dissipable dans l'eau.

Les films composites ainsi obtenus conviennent tout particulièrement bien comme support de couches magnétiques minces.

EP 0 378 954 A2

# FILMS POLYESTER COMPOSITES UTILISABLES NOTAMMENT COMME SUPPORTS POUR MATERIAUX D'ENREGISTREMENT MAGNETIQUE ET MATERIAUX D'ENREGISTREMENT MAGNETIQUE EN RESULTANT

La présente invention a pour objet des films polyester composites à faces lisses destinés à recevoir notamment un revêtement magnétique et aux matériaux d'enregistrement magnétiques qui en résultent.

En raison de leurs propriétés mécaniques et chimiques, les films polyester constituent un matériau de choix comme support de revêtements d'enregistrement magnétiques (oxydes métalliques ou alliages métalliques). Cependant, les films polyester manquent de glissant, ce qui occasionne des difficultés de mise en oeuvre et en particulier de bobinage, conséquence d'un coefficient de frottement élevé des films glissants sur eux-mêmes ou sur des surfaces métalliques lisses fixes ou en mouvement telles que celles présentes dans les appareils de fabrication des films (galets, cylindres) ou dans les appareils de reproduction de signaux enregistrés. Pour résoudre le problème posé par l'absence de glissant des films polyester, le moyen le plus utilisé consiste à leur communiquer une rugosité de surface par incorporation de particules inertes de sels ou d'oxydes métalliques qui génèrent des aspérités à la surface des films. Si pour de nombreuses applications la présence de ces aspérités n'est pas gênante, il n'en est pas de même dans le domaine du film magnétique.

En effet, les irrégularités de surface du film support se traduisent par des irrégularités de surface du revêtement magnétique et même par une discontinuité de ce revêtement qui entraînent une perte d'information à l'enregistrement et/ou à la lecture de l'information. Par ailleurs, l'abrasion de ces aspérités lors des usages répétés des films magnétiques contribue également à leur détérioration. Pour résoudre ces problèmes, il a fallu réaliser un compromis entre les propriétés de glissant et la rugosité de surface des films par la sélection des quantités de charges à mettre en oeuvre et de leurs dimensions particulaires. De nombreuses solutions ont été proposées qui se sont révélées satisfaisantes pour l'obtention de films d'enregistrement magnétiques de sons ou d'images (films vidéo) dans lesquels le revêtement magnétique est réalisé par dépôt d'un enduit magnétique. Dans ce cas, l'épaisseur de la couche magnétique est en général suffisante pour atténuer la topographie de la surface du film support. Par contre, ces solutions trouvent rapidement leurs limites lorsqu' il s'agit de fabriquer des films d'enregistrement magnétique à haute densité d'informations dans lesquels le revêtement magnétique, formé par évaporation d'oxydes ou d'alliages métalliques ou par revêtement cathodique (sputtering), est extrêmement mince: habituellement entre 0,01 et 0,2 μm. En effet, il convient dans ce cas de faire appel à des films dont la face recevant le revêtement magnétique (désignée ci-après face ventrale) doit être pratiquement lisse, c'est-à-dire présente une rugosité Ra, telle qu'elle sera définie par la suite, inférieure ou égale à 0,01 μm. Il devient alors difficile de bobiner le film en raison de l'augmentation de son coefficient de frottement. En définitive, dans le cas des films magnétiques à haute densité d'information, il devient difficile sinon impossible de concilier de bonnes propriétés de machinabilité avec de bonnes propriétés d'enregistrement et de restitution de l'information par incorporation de particules solides dans le film support, l'amélioration de chacune de ces propriétés se faisant au détriment des autres. Pour tenter de résoudre ce problème, on a proposé de faire appel à des films supports présentant une face ventrale lisse et une face opposée rugueuse, désignée ci-après face dorsale. De tels films peuvent être obtenus par coextrusion d'un polyester exempt de charges et d'un polyester contenant des charges minérales ou par dépôt, par enduction en ligne ou en reprise, de compositions de revêtement contenant des charges minérales. Néanmoins, il a été constaté que lorsque la rugosité de la face dorsale est due à la présence dans le polymère de particules de charges dures (particules minérales), la couche magnétique est endommagée par la face dorsale rugueuse adjacente lors du stockage en bobine, les irrégularités de cette face étant imprimées dans la couche magnétique. L'industrie est donc toujours à la recherche d'un moyen permettant de conférer à un film polyester support notamment pour revêtement magnétique à la fois une faible rugosité de surface, un bon glissant et une bonne résistance à l'abrasion, convenant notamment pour la fabrication de matériaux d'enregistrement magnétique à hautedensité. La présente invention se propose précisément de répondre à ce besoin.

Plus spécifiquement la présente invention a pour premier objectif la mise au point de films composites polyester dont la face ventrale est lisse, c'est-à-dire exempt de protubérances ou pics dus à la présence de charges, et dont la face dorsale présente simultanément de faibles coefficients de frottement.

Un second objectif de l'invention vise à l'obtention de films polyester composites dont la face dorsale présente une excellente résistance à l'abrasion.

Un troisième objectif de l'invention vise à conférer à des films polyester composites dont la face ventrale est lisse de bonnes propriétés de bobinabilité et de machinabilité sans que la face dorsale ne génère de défauts sur la couche magnétique d'un matériau d'enregistrement utilisant lesdits films comme supports.

Plus spécifiquement la présente invention a pour objectif la mise au point de films polyester présentant à la fois une rugosité de la face ventrale Ra telle qu'elle sera définie ultérieurement inférieure ou égale à 0,01μm, des coefficients de frottement film/métal tels qu'ils seront définis ultérieurement inférieurs ou égaux à 0,5 et une bonne résistance à l'abrasion.

Ces différents objectifs sont atteints par dépôt sur l'une au moins des faces d'un film polyester orienté semi-cristallin d'un revêtement spécifique destiné à améliorer les propriétés de surface desdits films.

Plus précisément, la présente invention a pour premier objet un procédé d'obtention de films polyester composites, utilisables notamment comme support d'un revêtement magnétique, constitués par un film polyester orienté dont l'une au moins des faces comporte un revêtement destiné à lui conférer un bon glissant et une bonne résistance à l'abrasion, caractérisé en ce que l'on dépose sur un film polyester orienté, exempt de particules minérales, à faces lisses et présentant une rugosité Ra inférieure ou égale à 0,01 μm un revêtement constitué par un polymère modifié obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy de formule générale :

$$(-SO_3-)_n M \quad (I)$$

dans laquelle :
- n est égal à 1 ou 2
- M représente un atome d'hydrogène, un métal alcalin ou alcalino-terreux, un cation ammonium, un cation ammonium quaternaire.

Par "polyester dissipables dans l'eau", on désigne aux fins de la présente demande, des polyesters solubles dans l'eau ou des polyesters formant dans l'eau des dispersions stables. Par "films polyester exempts de particules minérales", on désigne des films dans lesquels on n'a ajouté aucune charge et qui ne contiennent pas d'autres composants minéraux que les résidus des catalyseurs utilisés lors des phases de transestérification et de polycondensation au cours de la préparation du polyester.

La demanderesse a constaté de façon inattendue que les polymères modifiés obtenus par polymérisation d'au moins un monomère de nature acrylique en présence d'un polyester sulfoné, confèrent aux films polyester lisses, exempts de charges, de bonnes propriétés de glissant et, par conséquent, une bonne machinabilité et, en particulier, une bonne bobinabilité. Il a également été constaté que le revêtement conforme à l'invention présente une bonne résistance à l'abrasion. Ces films composites conviennent donc tout particulièrement bien comme support de revêtement magnétique et, en particulier, de revêtement magnétique à haute densité d'informations tels que ceux obtenus par évaporation ou revêtement cathodique de métal.

Un deuxième objet de la présente invention réside par conséquent dans un matériau d'enregistrement magnétique comprenant un film polyester orienté de rugosité Ra inférieure ou égale à 0,01 μm, un revêtement magnétique et, sur au moins une de ses faces, un revêtement destiné à conférer à l'ensemble un bon glissant et une bonne résistance à l'abrasion, caractérisé en ce que ledit revêtement est constitué par un polymère modifié obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy de formule générale :

$$(-SO_3-)_n M \quad (I)$$

dans laquelle :
- n est égal à 1 ou 2
- M représente un atome d'hydrogène, un métal alcalin ou alcalino-terreux, un cation ammonium, un cation ammonium quaternaire.

Les films polyester orientés utilisés comme support du revêtement en polymère modifié dans les films composites selon la présente invention sont ceux utilisés habituellement çomme supports pour la fabrication de matériaux magnétiques. Il sont constitués par des polyesters résultant de la polycondensation d'un ou plusieurs acides aromatiques dicarboxyliques (ou leurs dérivés) tels que les acides téréphtalique, isophtalique, naptalènedicarboxylique-2,6 avec un ou plusieurs alkylène-glycols (éthylèneglycol; propylèneglycol-1,3; butanediol-1,4). Des quantités mineures d'acides dicarboxyliques aliphatiques (acide adipique par exemple) ou d'acides cyclohexane dicarboxyliques ou de diols tels que les di ou trioxyalkylèneglycol, les diols aliphatiques ramifiés (néopentylglycol), le cyclohexanediméthanol-1,4, peuvent être associés aux diacides et diols de base. En général, ces composés ne représentent pas plus de 20% en moles de ces derniers. On fait appel de préférence à des polyesters comportant au moins 80% en moles de motifs dérivés d'au moins un acide dicarboxylique aromatique et d'éthylèneglycol et, plus préférentiellement, au moins 80% en moles de motifs téréphtalate ou naphtalènedicarboxylates d'éthylèneglycol.

3

Comme exemples de polyester qui sont utilisés préférentiellement comme supports, on peut citer le polytéréphtalate d'éthylèneglycol; le polytéréphtalate de butanediol-1,4; le polynaphtalènedicarboxylate-2,6 d'éthylèneglycol.

Les films polyester orientés supports sont obtenus de façon classique par extrusion d'une nappe de polyester amorphe, refroidissement de cette nappe, étirages dans une ou deux directions perpendiculaires, thermofixation et le cas échéant, traitements destinés à l'obtention de films équilibrés ou "surétirés".

Pour réaliser les films composites conformes à la présente invention, on fait appel de préférence à des films polyester orientés présentant une rugosité Ra inférieure ou égale à 0,01 $\mu$m (la rugosité Ra est mesurée selon la norme DIN 4 768 dans les conditions qui seront précisées ultérieurement) et une épaisseur inférieure ou égale à 40 um et de préférence comprise entre 5 et 35 $\mu$m.

Les polymères modifiés utilisés pour réaliser le revêtement des films composites selon l'invention, sont des produits connus obtenus par polymérisations radicalaires en milieu aqueux d'au moins un monomère acrylique en présence d'un polyester à groupes sulfonyloxy, dissipable dans l'eau. De tels polymères modifiés et leur procède d'obtention ont été décrits notamment dans la demande de brevet européen 0 260 203.

Les polyesters à groupes sulfonyloxy dissipables dans l'eau, sont des produits connus, décrits notamment dans les brevets français n° 1.401.581 et 1.602.002 et la demande de brevet européen n° 0 129 674; aux fins de la présente invention, on peut avoir recours aux polyesters à groupes sulfonyloxy décrits dans ces brevets. Plus spécifiquement, les polyesters dissipables dans l'eau sont obtenus par polycondensation d'un ou plusieurs acides aromatiques dicarboxyliques avec au moins un ou plusieurs diols aliphatiques et au moins un composé difonctionnel comportant au moins un groupe sulfonyloxy; par la suite, pour la commodité de l'exposé, l'expression "groupe sulfonyloxy" désignera aussi bien les groupes hydroxysulfonyles que les sels alcalins, alcalino-terreux ou d'ammonium qui en dérivent.

Parmi les acides aromatiques dicarboxyliques utilisables pour préparer les polyesters dissipables dans l'eau, on peut citer, à titre d'exemples non limitatifs : les acides téréphtalique, isophtalique, phtalique, napthtalènedicarboxylique-1,4, oxydibenzoïque-4,4', la bis(hydroxycarbonyl-4 phényl)sulfone, la dihydroxycarbonyl-4,4' benzophénone. Ces acides peuvent être utilisés seuls ou en mélanges.

Parmi les acides précités, on fait appel, de préférence, aux acides téréphtalique et isophtalique seuls ou en combinaison avec les autres acides cités. Les mélanges d'acide téréphtalique avec un ou plusieurs autres acides dicarboxyliques aromatiques et, en particulier, avec l'acide isophtalique conviennent tout particulièrement bien à l'obtention des polyesters sulfonés dissipables dans l'eau. Dans ce cas, la quantité d'acide téréphtalique exprimée en moles peut varier entre 20 et 99 % du nombre total de moles de diacides non sulfonés et de préférence entre 30 et 95 %.

Pour la préparation des copolyesters dissipables, des acides dicarboxyliques aliphatiques comportant de 3 à 15 atomes de carbone peuvent être associés aux diacides aromatiques. Plus particulièremennt, tout ou partie de l'acide aromatique utilisé conjointement à l'acide téréphtalique (par exemple l'acide isophtalique) peut être remplacé par des acides aliphatiques tels que les acides adipique, subérique, sébacique, succinique, dodécanedioïque.

Pour la préparation des polyesters sulfonés dissipables dans l'eau, les acides dicarboxyliques peuvent être remplacés, lors de la polycondensation, par leurs dérivés utilisés habituellement dans ce type de réaction : anhydrides, esters ou chlorures d'acides. On fait appel de préférence aux esters et en particulier aux esters méthyliques.

Comme exemple de diols utilisables pour la préparation des polyesters sulfonés dissipables dans l'eau, on peut citer l'éthylèneglycol; le butanediol-1,2; le diméthyl-2,2 propanediol-1,3; le pentanediol-1,5; l'hexanediol-1,6; le diéthylèneglycol; le triéthylèneglycol; le néopentylglycol; le cyclohexanediméthanol; le tétraéthylèneglycol; les penta-, hexa- ou décaméthylèneglycol. L'éthylèneglycol et ses oligomères conviennent tout particulièrement bien à la préparation des polyesters sulfonés. On peut les utiliser seuls ou en mélange entre eux et/ou avec d'autres diols. Les mélanges d'éthylèneglycol et de ses oligomères de formule HO-(CH$_2$-CH$_2$-O-)$_n$H dans laquelle n est un nombre entier compris entre 2 et 10 sont préférés.

Les groupes sulfonyloxy de formule -SO$_3$M sont introduits dans le polyester par l'intermédiaire d'un composé difonctionnel, à groupe sulfonyloxy, susceptible de réagir avec les diacides et/ou les diols au cours de la polycondensation. Des exemples de tels monomères sont cités dans le brevet français n° 1.602.002. On fait appel, de préférence, aux sels de métaux alcalins d'acides aromatiques dicarboxyliques à groupes sulfonyloxy tels que ceux des acides sulfoisophtalique, sulfophtalique, hydroxysulfonyl-4, naphtalènedicarboxylique-2,7 ou à leurs dérivés et, en particulier, à leurs esters. La quantité de composé bifonctionnel à groupe sulfonyloxy présente dans le polyester sulfoné, exprimée en moles pour un total de 100 moles de composé difonctionnel de même nature, est de préférence comprise entre 4 moles et 30 moles %. En général, des quantités de composé difonctionnel sulfoné comprises entre 5 moles et 20 moles

4

pour un total de 100 moles de composé difonctionnel de même nature conviennent bien. Ainsi, lorsqu'on fait appel à un sel alcalin de l'acide hydroxysulfonyl-5 isophtalique, ce composé peut représenter de 4 moles à 30 moles pour un total de 100 moles de motifs acides dicarboxyliques présents dans le polyester.

Parmi les copolyesters à groupes sulfonyloxy décrits ci-avant on fait appel de préférence à ceux qui présentent une température de transition vitreuse mesurée sous une humidité relative de 65% supérieure ou égale à 20° C.

Les polyesters dissipables dans l'eau décrits précédemment sont obtenus par les procédés usuels, par exemple par réaction du ou des diols avec un mélange des esters méthyliques des différents acides nécessaires, en présence des catalyseurs usuels de transestérification, puis polycondensation des esters de diols ainsi obtenus. Les quantités de chacun des réactifs sont calculées pour que le rapport du nombre total de groupes hydroxyles alcooliques au nombre total de groupes carboxyliques soit de préférence compris entre 2 et 2,5.

Les monomères acryliques auxquels on fait appel pour la préparation des polymères modifiés peuvent être représentés par la formule générale :

$$CH_2 = \overset{\overset{\displaystyle R}{|}}{C} -Y \qquad (II)$$

dans laquelle :
- R représente un atome d'hydrogène ou un groupe alkyle inférieur, éventuellement substitué par un groupe hydroxyle ;
- Y représente un groupe fonctionnel hydroxycarbonyle; alkoxycarbonyle de formule $-COOR_1$ dans lequel $R_1$ est un radical alkyle comportant de 1 à 20 atomes de carbone, linéaire ou ramifié (éventuellement substitué par un reste hydroxyle); nitrile; amide de formule $-CON(R_2, R_3)$ dans laquelle $R_2$ et $R_3$, identiques ou différents représentent un atome d'hydrogène ou un reste alkyle linéaire ou ramifié, comportant de 1 à 20 atomes de carbone.

Par radical alkyle inférieur, on désigne des radicaux alkyles comportant de 1 à 4 atomes de carbone.

Comme exemples spécifiques de radicaux $R_1$, $R_2$ et $R_3$, on peut citer les radicaux méthyle, éthyle, n-propyle, isopropyle, n-butyle, isobutyle, tertiobutyle, n-pentyle, n-hexyle, éthyl-2 hexyle, décyles, dodécyles, octadécyles. Comme exemple de radicaux hydroxyalkyles $R_1$, on peut citer les radicaux hydroxyméthyle, hydroxy-2 éthyle, hydroxy-3 propyle, hydroxy-4 butyle.

Dans la formule (II), R représente de préférence un atome d'hydrogène ou des radicaux méthyle ou hydroxyméthyle.

Parmi les dérivés acryliques de formule (I) auxquels on peut faire appel pour la préparation des polymères modifiés, on peut citer à titre non limitatif : l'acide acrylique, l'acide méthacrylique, l'acrylonitrile, le méthacrylonitrile, l'acrylamide, la méthacrylamide, la N-méthylacrylamide, les acrylates et méthacrylates de méthyle, d'éthyle, de n-propyle, d'isopropyle, de n-butyle, d'isobutyle, d'éthyl-2 hexyle, de stéaryle. Ces monomères peuvent être utilisés seuls ou en mélanges de deux ou plus de deux dérivés acryliques. Comme exemple d'association de dérivés acryliques, on peut citer les mélanges: méthacrylate de méthyle/acide acrylique et/ou méthacrylique, méthacrylate de méthyle/acide acrylique ou méthacrylique/acrylate d'éthyle; méthacrylate de méthyle/acrylate d'éthyle/acrylamide ou méthacrylamide acrylamide/méthacrylamide; acrylate de butyle/acide acrylique; méthacrylate de butyle/acrylate d'éthyle.

Les composés acryliques peuvent encore être associés à une quantité mineure d'un ou plusieurs monomères éthyléniques tels quel l'acétate de vinyle, le chlorure de vinylidène, le styrène, le méthylstyrène, les acides crotonique, itaconique, fumarique ou maléïque, les sels alcalins ou alcalino-terreux d'acides sulfoniques éthyléniques tels que les acides vinylsulfoniques, allylsulfonique, méthallylsulfonique, styrène-sulfonique. La quantité de monomère éthylénique non acrylique est calculée de façon à ce que dans le copolymère obtenu le nombre de motifs récurrents de ce monomère non acrylique exprimé en moles pour 100 moles de monomère acrylique soit de préférence inférieur ou égal à 20% et plus préférentiellement encore à 10 %. Des quantités de motifs éthyléniques représentant de 0,1 à 5 % en moles conviennent bien.

On peut, sans sortir du cadre de la présente invention, associer à ces monomères un ou plusieurs monomères susceptibles de provoquer une réticulation de la partie acrylique. A cet effet, on peut faire appel à des monomères polyéthyléniques susceptibles de se réticuler sous l'action des générateurs de radicaux libres au cours de la polymérisaton ou bien à des monomères provoquant une réticulation de la partie acrylique par chauffage, par exemple lors du processus d'obtention du film revêtu ou lors d'un traitement thermique ultérieur du film revêtu. Comme exemple, de monomères polyéthyléniques, on peut citer le phtalate de diallyle, le divinylbenzène, les diacrylates ou diméthacrylates de diols tels que le diméthacrylate d'éthylèneglycol. Conviennent comme réticulants sous l'effet de la chaleur des hydroxyalkyl-(méth)acrylamides telles que la N-méthylolacrylamide et la N-méthylolméthacrylamide.

5

La quantité de monomère réticulant exprimée comme précédemment est de préférence inférieure à 5 moles pour 100 moles de monomère acrylique non réticulant. En général, elle est comprise entre 0,1 et 3 moles %.

Pour la préparation des polymères modifiés on opère selon les techniques habituelles de polymérisation radicalaire des monomères à non saturation éthylénique en phase aqueuse. En général, la polymérisation est réalisée par dispersion du ou des monomères acryliques dans un volume convenable d'eau dans lequel on introduit la quantité nécessaire d'un polyester sulfoné dissipable et le cas échéant, un ou plusieurs agents émulsifiants classiques. En effet, bien que le polyester sulfoné puisse jouer lui-même le rôle d'émulsifiant permettant la dispersion du ou des monomères dans l'eau, cela n'exclut pas le recours aux agents tensio-actifs usuels tels que, par exemple, les sels alcalins de sulfates d'alcools à longue chaîne (laurylsulfate de sodium; laurylsulfate d'éthanolamine); les sels alcalins d'acides sulfoniques à longues chaînes; les émulsifiants non ioniques tels que les polyoxyéthylènesglycols et leurs dérivés; les alkylphénols alcoxylés, éventuellement sulfatés. De préférence on opère en présence de 0,1 à 2% en poids rapporté au total copolyester/monomères polymérisables d'un agent tensioactif. La polymérisation est initiée à l'aide des générateurs de radicaux libres habituels tels que les composés peroxydes : persulfates, eau oxygénée, peroxydes organiques (peroxydes de lauroyle, de benzoyle, hydroperoxyde de t-butyle); les composés azo (azodiisobutyronitrile); les systèmes redox associant un composé peroxydique, de préférence soluble dans l'eau et un réducteur : sels ferreux (sulfate), sulfites ou bisulfites alcalins.

D'autres adjuvants usuels de polymérisation peuvent être présents dans le milieu réactionnel. Ainsi, on peut opérer en présence d'un agent limiteur de chaîne usuel tel que les mercaptans (dodécylmercaptan, tétradécylmercaptan), de façon à régler le poids moléculaire du copolymère obtenu en fonction des propriétés désirées pour le revêtement.

La température à laquelle est conduite la polymérisation peut varier dans de larges limites. En général, une température comprise entre 10 et 100°C et de préférence entre 20 et 80°C convient bien.

L'étude du produit résultant de la polymérisation d'au moins un monomère acrylique tel que défini ci-avant, en présence d'un polyester dissipable, a permis de constater que le polyester est liée chimiquement au polymère acrylique. Sans que l'invention soit en quoi que ce soit limitée à un mécanisme réactionnel particulier, il semble que le polyester et le(s) monomère(s) acrylique(s) réagissent pendant la polymérisation avec formation d'un copolymère greffé.

Pour l'obtention des films composites selon l'invention, il est préférable que dans le produit résultant de la polymérisation, le polyester dissipable représente au moins 5% en poids et de préférence au moins 10 % en poids du total polyester dissipable/(co)polymère acrylique. La présence de polyester dissipable non lié chimiquement et/ou de (co)polymère acrylique libre n'est pas préjudiciable à la mise en oeuvre du procédé; il n'est donc pas nécessaire de les éliminer de l'émulsion obtenue. La quantité de polyester dissipable peut varier dans de larges limites. En général, cette quantité peut représenter jusqu'à 60% en poids du total polymère dissipable/(co)polymère acrylique. Une quantité de polyester dissipable comprise entre 10 et 45 % en poids convient bien.

On a constaté que la résistance à l'abrasion du revêtement dépend dans une certaine mesure de la concentration en copolyester sulfoné dans le polymère modifié et, que toutes choses étant égales par ailleurs, la résistance à l'abrasion du revêtement augmente quand cette concentration augmente. La concentration optimale est choisie en prenant en considération la valeur de la température de transition vitreuse de la partie acrylique du polymère modifié, telle qu'elle sera définie ci-après, qui exerce un effet sur le coefficient de frottement du film et sur la résistance à l'abrasion du revêtement. De façon générale il est préférable d'augmenter la teneur en copolyester sulfoné du polymère modifié lorsque la température de transition vitreuse de la partie acrylique du polymère modifié augmente. La concentration optimale peut être déterminée aisément dans chaque cas particulier au moyen d'essais simples.

La concentration du polyester dissipable et du ou des monomère(s) polymérisable(s) dans la phase aqueuse de polymérisation n'est pas critique et peut varier dans de larges limites. Cette concentration est choisie en fonction du taux de matières solides désiré pour l'émulsion finale et du taux de polymérisation du ou des monomère(s) dans les conditions de polymérisation.

Le produit aqueux obtenu après polymérisation peut être utilisé directement pour la mise en oeuvre du procédé selon l'invention. Il peut également faire l'objet de traitements divers. Ainsi, on peut à la fin de la polymérisation procéder à l'élimination des monomères non transformés par les moyens usuels. Lorsque l'un ou plusieurs des composants de la réaction comporte des fonctions acides libres, ces dernières peuvent être neutralisées par addition d'une base minérale ou organique; on fait appel de préférence à une base alcaline (soude, potasse), à un hydroxyde d'ammonium quaternaire ou à l'ammoniaque. Il peut s'agir des fonctions acide sulfonique du polyester dissipable et/ou des fonctions acide carboxylique du (co)polymère acrylique. On peut encore ajouter à l'émulsion obtenue des adjuvants tels des stabilisants, ou des agents antistatiques. Selon une variante, on peut encore introduire dans l'émulsion obtenue des agents de réticulation externes connus des (co)polymères acryliques.

La nature des agents réticulants dépend de la nature du ou des monomères acryliques. Parmi les agents réticulants préférés, on peut citer, les résines formophénoliques, les résines amines-formol telles que les produits de condensation mélamine/formol, urée/formol, triazine/formol. La quantité de réticulant est alors en général comprise entre 0,1 et 15% en poids et de préférence entre 0,5 et 12 % en poids par rapport au poids total du polyester dissipable et du (co)polymère acrylique présents dans l'émulsion.

Le produit résultant de la polymérisation présente diverses formes, selon la proportion et la nature des réactifs mis en jeu et/ou les conditions de la polymérisation, et/ou le traitement final appliqué au produit obtenu. Ainsi, les produits résultant de la polymérisation d'un monomère acrylique non acide avec une quantité notable d'un acide polymérisable ( acides (meth) acryliques, acide crotonique ), par exemple au moins 5 % en moles du total des monomères polymérisables peut se présenter sous forme d'une émulsion vraie lorsque les groupes acides carboxyliques sont libres ou sous forme de solutions aqueuses plus ou moins visqueuses lorsque les groupes carboxyliques sont neutralisés au moyen d'une des bases citées auparavant et en particulier au moyen d'une base alcaline. La viscosité des dispersions ou solutions de polymères modifiés n'est pas critique et peut être réglée à volonté en fonction des besoins par modification de leur teneur en extrait sec.

Parmi les copolymères modifiés utilisés pour l'obtention des films composites conformes à la présente invention, on fait appel de préférence à ceux dans lesquels la partie acrylique a une composition telle que ladite partie conduirait à un (co)-polymère acrylique libre ayant une température de transition vitreuse comprise entre environ $0\,°C$ et environ $100\,°C$ et de préférence, entre 0 et $80\,°C$ et plus préférentiellement encore entre 20 et $70\,°C$.

On a constaté en effet que les coefficients de frottement statique et dynamique film/film et film/métal diminuent avec l'augmentation de la température de transition vitreuse (Tg) de la partie acrylique, jusqu'à une valeur limite. On a constaté également que la résistance à l'abrasion augmente avec la diminution de la Tg de la partie acrylique du copolymère modifié. Ce dernier est donc choisi pour réaliser le meilleur compromis coefficient de frottement/résistance à l'abrasion. En général, on fait appel à des copolymères modifiés dont la Tg de la partie acrylique est choisie en fonction de la température d'utilisation du film support obtenu et de la propriété que l'on veut favoriser; la Tg peut s'écarter plus ou moins de cette température d'utilisation; en général elle se situe dans un intervalle compris entre $20\,°C$ au dessous de la température d'utilisation du film et $60\,°C$ au dessus de cette température. Pour bénéficier de l'effet bénéfique d'une Tg élevée (en particulier supérieure à $20\,°C$) de la partie acrylique sur les coefficients de frottement et compenser l'effet néfaste d'une telle augmentation sur la résistance à l'abrasion du revêtement on peut, comme cela a été indiqué ci-avant, augmenter la concentration en copolyester à groupes sulfonyloxy. Ainsi pour des Tg de la partie acrylique voisines de (ou supérieures à) la température d'utilisation des films et en particulier pour des Tg supérieures ou égales à $20\,°C$, il est préférable de faire appel à des polymères modifiés contenant au moins 20 % en poids de copolyester sulfoné et, de préférence au moins 25 %.

Il est cependant possible d'obtenir des coefficients de frottements relativement faibles sans recourir à des Tg trop élevées de la partie acrylique, par modification des propriétés viscoélastiques du polymère modifié. Un tel résultat peut être obtenu notamment par réticulation de la partie acrylique au moyen des réticulants internes ou externes précédemment décrits. Le taux de réticulation adéquat sera déterminé aisément par l'homme de métier pour chaque cas particulier en fonction de la composition de la partie polymérisable.

Selon une autre variante il est possible d'utiliser des polymères modifiés dont la partie acrylique présente une Tg basse, notamment inférieure à $20\,°C$ et par conséquent de bénéficier des bonnes propriétés de résistance à l'abrasion du revêtement, en incorporant au polymère modifié des charges polymères sous forme de particules sensiblement sphériques non susceptibles d'endommager le revêtement magnétique déposé ultérieurement sur l'autre face du film support lors du contact d'une face dorsale avec une face ventrale; ceci permet d'obtenir un abaissement des coefficients de frottement du revêtement sans augmenter la rugosité de la face ventrale destinée à recevoir le revêtement magnétique sans augmenter défavorablement la rugosité du film obtenu.

Comme charge, on fait appel à des particules sensiblement sphériques de polymères hydrocarbonés tels que les polyoléfines (polyéthylène, polypropylène), le polystyrène, les copolymères réticulés du styrène avec un monomère polyéthylénique (divinylbenzène par exemple) ou de polymères acryliques tels que les polyacrylates et méthacrylates d'alkyle de préférence réticulés (par exemple le polyméthacrylate de méthyle réticulé par du diméthacrylate d'éthylèneglycol.

Les particules sphériques de polymère ont un diamètre moyen inférieur à 0,2 $\mu$m et de préférence

compris entre 0,05μm et 0,15μm.

Par diamètre moyen des particules on désigne le diamètre moyen de la distribution de taille des particules déterminé par microscopie électronique à balayage avant leur mise en oeuvre. Ces particules sont exemptes de sphères de diamètre supérieur à 1 μm.

La quantité de sphères de polymère introduites dans le polymère modifié dépend de la température de transition vitreuse de ce dernier. Elle est calculée pour conférer à la couche dorsale à la fois un coefficient de frottement et une rugosité totale suffisamment faibles. En général, la quantité de particules sphériques représente au plus 8% en poids du polymère modifié et de préférence entre 0,5 % et 5 % en poids.

Le dépôt du revêtement sur le film polyester peut être réalisé par les différentes techniques connues de l'homme de l'art. Ainsi, l'émulsion ou la solution aqueuse de polymère peut être déposée par gravité à partir d'une couleuse à fente, ou par passage du film dans l'émulsion ou la solution ou encore au moyen de rouleaux de transfert. L'épaisseur de la couche est contrôlée par tout moyen approprié. Le dépôt du revêtement peut avoir lieu soit avant tout étirage du film (enduction en ligne), soit après étirage avant ou après thermofixation (enduction en reprise). On préfère toutefois procéder à l'enduction du film polyester avant l'étirage ou entre deux étirages.

Préalablement à l'enduction, le film polyester peut être soumis à un traitement de surface choisi parmi ceux habituellement utilisés et, plus particulièrement, parmi les traitements physiques. Ainsi, la face destinée à recevoir le revêtement peut être soumise à des décharges électriques (traitement corona) ou à des radiations ionisantes. Cependant, de tels traitements ne sont pas indispensables.

La quantité de composition aqueuse d'enduction déposée sur le film dépend d'une part de sa teneur en extrait sec et, d'autre part, de l'épaisseur désirée pour le revêtement du film fini, c'est-à-dire après étirage et thermofixation lorsque l'enduction a lieu en ligne. Cette quantité dépend également du moment de l'enduction; on doit évidemment tenir compte de la variation d'épaisseur du revêtement avant et après étirage, lorsque l'enduction est réalisée avant étirage. L'épaisseur du revêtement fini peut varier dans de larges limites. On a cependant constaté que le coefficient de frottement augmente jusqu'à une certaine limite avec l'épaisseur de l'enduit et que par conséquent, il n'est pas indiqué que le revêtement dorsal présente une épaisseur supérieure à 1 μm. D'autre part, si l'épaisseur de l'enduit est trop faible, le film polyester composite devient difficile à bobiner par suite de l'irrégularité du revêtement. Dans ces conditions, il est préférable que l'épaisseur du revêtement de polymère modifié soit supérieure ou égale à 0,05 μm et inférieure à 0,7 μm. De préférence, elle est comprise dans un intervalle de 0,1 à 0,5 μm.

Après enduction, le film polyester est traité à chaud pour éliminer l'eau contenue dans le revêtement et, le cas échéant, pour provoquer la réticulation du polymère. Dans le cas de l'enduction en ligne, il n'est en général pas nécessaire de procéder à un traitement thermique; le séchage et éventuellement la réticulation sont réalisés au cours de l'étirage et de la thermofixation. On ne sortirait cependant pas du cadre de la présente invention en procédant, dans ce cas, préalablement à l'étirage et à la thermofixation, à un traitement thermique suffisant pour provoquer la coalescence du latex et le séchage.

Le revêtement de polymère modifié peut être appliqué sur une seule des faces ou sur les deux faces du film polyester support lisse. Dans ce dernier cas, le revêtement situé sur la face destinée à recevoir le revêtement final et, en particulier, le revêtement magnétique, contribue à en améliorer l'adhérence au support. Dans ce dernier cas il est préférable que le revêtement soit exempt de charge.

L'obtention des films d'enregistrement magnétique conformes à l'invention est réalisée par dépôt sur une face des films polyester composites, selon les procédés connus, d'une substance magnétique. Bien que l'on puisse faire appel à l'enduction par un enduit magnétique constitué par une substance ferro-magnétique telle que les oxydes de fer, de nickel, de cobalt, de chrome ou leurs mélanges dispersés dans un liant polymère, les films polyester conformes à l'invention conviennent tout particulièrement bien à l'obtention de films à haute densité d'informations par dépôt d'un revêtement magnétique mince par les techniques d'évaporation de métal, ou de métallisation ionique. Préalablement au dépôt du revêtement magnétique, le film polyester composite peut être soumis à divers traitements pour améliorer ses propriétés. Ainsi, il peut subir un traitement corona pour augmenter ses propriétés d'adhésion au revêtement magnétique. Dans le même but, il est encore possible de lui appliquer une couche d'un primaire d'adhérence. A cet effet, on peut faire appel aux nombreuses compositions décrites dans la littérature et bien connues de l'homme de l'art. Il s'avère toutefois particulièrement simple de faire appel aux solutions ou dispersions aqueuses de polyesters sulfonés modifiés par des monomères acryliques décrites ci-avant, conformément à l'enseignement de la demande de brevet européen 0 260 203.

A cet effet, on peut utiliser un film composite conforme à l'invention comportant sur chacune de ses faces une couche de copolymère modifié; la couche présente sur la face destinée à recevoir le revêtement magnétique (face ventrale) jouant le rôle de primaire d'adhérence et la couche présente sur la face opposée (face dorsale) assurant la machinabilité de la bande magnétique. La composition du revêtement des faces ventrale ou dorsale peut être identique ou différente. Ainsi, le revêtement de la couche ventrale peut être exempt de charge ou la partie acrylique et/ou la partie copolyester sulfoné peuvent différer sur l'une et l'autre face par leur composition.

Lorsqu'une seule face du film composite comporte le revêtement de copolymère modifié, le revêtement magnétique est de préférence déposé sur la face opposée qui devient la face ventrale de la bande magnétique. On ne sortirait toutefois pas du cadre de la présente invention en déposant le revêtement magnétique sur le revêtement de copolymère modifié.

Bien que les films composites conviennent tout particulièrement bien à l'obtention de bandes magnétiques, ils peuvent être utilisés comme support d'autres revêtements finals qui nécessitent le recours à des supports de faible rugosité.

Les films magnétiques ainsi obtenus peuvent ensuite être transformés en matériaux d'enregistrement magnétique tels que rubans ou disques par les techniques usuelles.

Les exemples suivants illustrent l'invention et montrent comment elle peut être mise en pratique. Dans ces exemples, on a procédé à la détermination des propriétés suivantes des films composites :

### 1°) Rugosités

#### a) Ecart moyen arithmétique : rugosité Ra (ou CLA)

Cette caractéristique définie dans la norme DIN 4.768 a été mesurée sur un appareil PERTHEN S6P conformément à la méthode décrite dans cette norme, dans les conditions suivantes :
- valeur de la longueur d'onde de coupure (cut-off) : 0,08 mm,
- longueur de palpage : 1,75 mm,
- rayon de courbure du palpeur : 5 $\mu$m
- force d'appui du palpeur : 50 mg.f

Le résultat retenu est la moyenne de 30 mesures effectuées sur des profils distants de 20 $\mu$m.

#### b) Hauteur maximale des pics de surface : HM

La hauteur maximale des pics de surface a été déterminée par interférométrie selon NOMARSKI, en lumière blanche. A cet effet on a utilisé un microscope NACHET NS 400 équipé d'un interféromètre NOMARSKI, et d'un objectif ayant un grossissement de 80.

#### c) Rugosité tridimentionnelle optique SRa et SRz.

La rugosité SRa représente l'écart moyen arithmétique de la rugosité de surface par rapport au plan moyen exprimée en $\mu$m (il s'agit de l'extention de la rugosité Ra à une surface).

La rugosité SRz est l'écart entre deux plans moyens parallèles :
- un plan moyen supérieur défini par la moyenne des cinq pics les plus hauts.
- un plan moyen inférieur défini par la moyenne des cinq vallées les plus profondes.

Les rugosités SRa et SRz ont été déterminées au moyen d'un appareil de marque SURFCORDER ET-30 HK récupéré de l'unité de traitement SPA 11 de la Société KOSAKA Laboratories Ltd et d'un capteur de type optique de marque HIPOSS, dans les conditions suivantes :
- longueur d'onde de coupure (Cut-Off) - 0,08 mm
- grandissement : x 20 000
- vitesse de palpage : 20 $\mu$m/s
- longueur de palpage : 0,25 mm avec un pas d'échantillonnage de 0,5 $\mu$m
- nombre de profils : 150 avec un pas entre profils de 0,5 $\mu$m.
- surface testée : 0,25 mm x 0,075 mm
- gain : 1
- hystérésis : 1

### 2°) Coefficients de friction

a) Film sur film : μs et μd

On mesure le coefficient de friction statique (μs) au démarrage et le coefficient de friction dynamique (μd) en régime d'un film se déplaçant sur un autre film, conformément à la norme ASTM D 1894.78, sur appareil Davenport dans les conditions suivantes :
- surface de contact     6,3 x 6,3 cm.
- tension.de bande     200 g
- pression     5 g/cm²
- vitesse     15 cm/mn
- longueur sollicitée     13 cm


b) Film sur métal : μk

La mesure du μk a été réalisée selon la méthode décrite page 11 § 3 de la demande de brevet européen 0 66 997 dans les conditions suivantes :
- diamètre du galet fixe     10 mm
- largeur de bande     2,5 cm
- vitesse de défilement     5 m/mn
- tension.de bande     200 g
- durée     20 mn
- température     25°C
- humidité relative     35 %
- aire de contact     5 cm²
- angle d'embarrage sur le galet     205°


c) Coefficients de friction statique (μs) et dynamique (μd) film/métal

Ils ont été déterminés selon la méthode dite "SHOE-SHINE" décrite dans la demande de brevet japonais J 63 28627 en utilisant un appareil analogue à celui décrit dans ladite demande avec les conditions suivantes :
- diamètre du galet     6 mm
- largeur de bande     1,27 cm
- vitesse de défilement     0,9 m/mn
- tension     50 g
- durée     15 mn
- température     25°C
- humidité relative     35 %
- aire de contact     1,27 x 0,7 cm²
La fréquence de sollicitation en cisaillement est de l'ordre de 1 Hz.
Dans ce qui suit Tg(A) désignera la température de transition vitreuse du copolymère acrylique libre.


EXEMPLE 1


1°) Préparation d'un copolyester sulfoné modifié

En utilisant le procécé décrit dans l'exemple 1 de la demande de brevet européen n° 0 260 203, on a préparé un copolyester sulfoné modifié par polymérisation en milieu aqueux d'un mélange de méthacrylate de méthyle (MAM), d'acrylate d'éthyle (AE), d'acide méthacrylique (AMA), de vinylsulfonate de sodium (VS) et d'acétate de vinyle (AVM), en présence d'un copolyester sulfoné obtenu à partir de :
- 0,524 mole d'acide isophtalique,
- 0,348 mole de téréphtalate de diméthyle,
- 0,128 mole de sel de sodium de l'ester diméthylique de l'acide sulfo-5-isophtalique,
- 2,3 moles d'éthylèneglycol
et présentant un indice de viscosité de 556 mesuré à 25°C sur une solution à 1 g de polymère dans 100 ml d'un mélange phénol/o-chloro-phénol dans un rapport pondéral 50/50 et une Tg de 29°C à HR 65 %. Ce polyester sulfoné de poids moléculaire moyen en nombre de 17 000 à une teneur en diéthylèneglycol de 13 % en poids.

Le latex ainsi obtenu a un taux pondéral d'extrait sec de 42,9 % dont la composition pondérale est la suivante :
- MAM 34 %
- AE 25,5 %
- AMA 7,5 %
- AVM 3,5 %
- VS 0,5 %
- copolyester sulfoné 29 %.

Le polymère modifié ainsi obtenu présente une température de transition vitreuse Tg(A) de 55°C et le latex a une viscosité absolue de 0,45 poises.

2°) Préparation d'un film polyester composite.

Le latex obtenu précédemment est dilué par addition d'eau distillée pour amener sa concentration en extrait sec à 10 % en poids. On dépose ensuite sur un film polyester biétiré de 30 µm d'épaisseur une couche de latex de 4 µm d'épaisseur au moyen d'un appareil HAND-COATER équipé d'une barre filetée n° 0. Le film enduit est ensuite séché sous tension à 120°C pendant 30 sec. L'épaisseur de l'enduit après séchage est de 0,5 µm.

Le film polyester soumis à l'enduction a été obtenu par extrusion, étirage longitudinal puis transversal puis thermofixation d'un polytéréphtalate d'éthylèneglycol exempt de charge et présentant un indice de viscosité de 650. La rugosité Ra du film support ainsi obtenu est, avant enduction, inférieure à 0,01 µm. Sa rugosité SRa mesurée comme indiqué ci-avant est de 0,016 µm.

3°) Détermination des propriétés de surface du film composite

. Coefficients de frottement

Les coefficients de frottement statique et dynamique film/métal déterminés par la méthode "SHOE-SHINE" décrite ci-avant, ont les valeurs suivantes :
- µs : 0,45
- µd : 0,42
. HM : 0,05 µm de la face dorsale
. Résistance à l'abrasion : excellente
. Ra face ventrale <0,01 µm

L'examen des parties frottées par microscopie électronique à balayage a montré une excellente résistance à l'abrasion du revêtement dorsal : seules quelques rares particules d'usure ont été observées.

A titre comparatif on a préparé un film composite comme à l'exemple 1 après avoir remplacé le latex par un latex de même teneur en extrait sec dans lequel le polymère modifié a la même composition de la partie acrylique mais dont la teneur en copolyester sulfoné a été ramenée à 15 % en poids. Le film ainsi obtenu présente une mauvaise tenue à l'abrasion du revêtement.

EXEMPLES 2 à 5 et essai comparatif

1°) Préparation de polyesters sulfonés modifiés.

En opérant selon le procédé de l'exemple 1, on a préparé 3 copolyesters sulfonés modifiés différant par leur composition et leur température de transition vitreuse.

La polymérisation des monomères éthyléniques a été conduite éventuellement en présence de tertiododécylmercaptan (tDDM) comme limiteur de chaîne. On a obtenu de cette façon cinq latex désignés par la suite L1, L2, L3, L4 et L5 comportant respectivement 40,1 ; 39,9; 41 et 40% en poids d'extrait sec

11

constitués par des copolyesters modifiés P1, P2, P3, P4 et P5 ayant la composition et la température de transition vitreuse consignées dans le tableau 1.

| REF | AVM | AcC | AMA | AE | ABu | MAM | PS | NMMA | tDDM | ES | Tg(A) |
|---|---|---|---|---|---|---|---|---|---|---|---|
| | | | | | | | | | (%) | | (°C) |
| | | (1) | | | (2) | | (3) | (4) | (6) | | (5) |
| P1 | 0 | 0 | 2 | 0 | 22 | 56 | 20 | 0 | 0 | 40,1 | 42 |
| P2 | 0 | 0 | 2 | 0 | 42 | 36 | 20 | 0 | 0 | 39,9 | 8 |
| P4 | 0 | 0 | 2 | | 32 | 46 | 20 | 0 | 0 | 40 | 20 |
| P3 | 4 | 0,6 | 8,8 | 32,4 | 0 | 39,6 | 20 | 2,4 | 0,32 | 41 | 35 |
| P5 | 0 | 0 | 1 | 0 | 15 | 64 | 20 | 0 | 0 | 40 | 60 |

(1) acide crotonique ;
(2) acrylate de butyl ;
(3) copolyester sulfoné ;
(4) N-méthylolméthacrylamide utilisée comme réticulant ;
(5) de la partie acrylique
(6) % en poids par rapport au total des monomères

## 2°) Préparation d'un film polyester composite

En opérant selon le procédé de l'exemple 1, on a préparé des films composites par dépôt des latex P1, P2, P3, P4 et P5 préalablement dilués pour abaisser leur concentration en extrait à 10 % en poids sur le film polyester de l'exemple 1.
L'épaisseur du revêtement après séchage est dans tous les cas de 0,5 μm.
Les films composites ainsi obtenus sont désignés respectivement CP1, CP2, CP3, CP4 et CP5.

## 3°) Détermination des propriétés de surfaces

. Coefficients de frottement

Les μs et μd déterminés par la méthode "SHOE-SHINE" sont consignés dans le tableau suivant :

| EX | FILM COMPOSITE | μs | μd | HM dorsale |
|---|---|---|---|---|
| 2 | CP1 | 0,45 | 0,42 | <0,04μm |
| 3 | CP3 | 0,37 | 0,35 | " |
| 4 | CP4 | 0,5 | 0,5 | " |
| 5 | CP5 | 0,45 | 0,4 | " |
| EC1 | CP2 | 0,9 | 0,8 | " |

On constate que les coefficients de frottement augmentent avec l'abaissement de la température de transition vitreuse de la partie acrylique.

. Résistance à l'abrasion

L'examen des parties frottées fait ressortir que le composite CP2 a une très bonne résistance à l'abrasion, supérieure à celle des composites CP1, CP3, CP4 et CP5 alors qu'il présente des coefficients de frottement élevés.

## EXEMPLE 6

1°) Préparation d'un film composite

On prépare un film composite de référence $C2P_1$ par enduction en ligne d'un film PET non chargé à l'aide du latex L1 déposé sur le film entre l'étirage longitudinal et l'étirage transversal. Les conditions de filmature sont les suivantes :
- étirage longitudinal
. taux : 3,4
. température : 75°C
- étirage transversal
. température : 110-120°C
- thermofixation : 210°C
(Le films vierge obtenu dans ces conditions présente une rugosité SRa de 0,016 $\mu$m et une rugosité Ra inférieure à 0,01 $\mu$m).

L'enduction est réalisée par passage du film PET monoétiré entre un rouleau report en caoutchouc et un rouleau presseur en caoutchouc, le rouleau report étant en contact avec un cylindre gravé tournant dans le latex L1 (système HELIO-REPORT). Le film monoétiré enduit passe ensuite dans une zone de préchauffage portée à 95°C dans laquelle s'effectue le séchage de l'enduit puis est étiré dans le sens transversal, soumis à la thermofixation et bobiné. On a obtenu de cette façon un film enduit bobiné sans difficulté, d'épaisseur totale 9 $\mu$m et dont l'épaisseur du revêtement dorsal est de 0,25 $\mu$m.

2°) Propriété du film composite C2P1

| . Coefficient de frottement : | |
|---|---|
| Film/métal | Film/film |
| - $\mu$s 0,45 ; <br> - $\mu$d 0,4 ; <br> - $\mu$k 0,43 ; | 0,63 <br> 0,5 |

. Rugosité : HM <0,04 $\mu$m ;
. Résistance à l'abrasion : bonne ;
. Bobinabilité : excellente.

## EXEMPLE 7

On a répété l'exemple 6 après avoir dilué de moitié le latex L1 pour amener sa concentration en extrait sec à 20 % en poids. On a obtenu un film composite C3P1 dont le revêtement dorsal a une épaisseur de 0,12 $\mu$m et qui présente les propriétés suivantes :

| Film/métal | Film/film |
|---|---|
| - $\mu$s 0,42 ; <br> - $\mu$d 0,4 ; <br> - $\mu$k 0,4 ; | 0,77 <br> 0,54 |

. Rugosité : HM <0,04 $\mu$m ;

. Résistance à l'abrasion : bonne ;
. Bobinabilité : excellente.

EXEMPLE 8 à 9

On a préparé deux films composites C2P3 et C3P3 par enduction en ligne du film PET de l'exemple 6, selon le procédé décrit dans cet exemple à partir du latex L3 à 40 % puis à 20 % d'extrait sec. Les films composites présentent les propriétés suivantes :

|  | Frottement Film/métal | | | Bobinabilité | Résistance à l'abrasion |
|---|---|---|---|---|---|
|  | $\mu$s | $\mu$d | $\mu$k |  |  |
| C2P3 | 0,43 | 0,35 | 0,5 | bonne | bonne |
| C3P3 | 0,4 | 0,35 | 0,4 | " | " |

EXEMPLES 10 à 14

On a préparé une série de films polyesters composites en utilisant le procédé de l'exemple 6 à partir des latex L1 (teneur en extrait sec 20 %), L3 (teneur en extrait sec 20 %), et L2 (teneur en extrait sec 20 %) après leur voir ajouté des quantités variables de billes de polystyrène de diamètre moyen 0,15 $\mu$m.

Les films composites ainsi obtenus présentent les caractéristiques figurant dans le tableau ci-après.

| EX | LATEX | | TENEUR EN BILLES % en poids | COEFFICIENTS DE FROTTEMENT | | | | | HM dorsale $\mu$m | BOBINABILITE |
|---|---|---|---|---|---|---|---|---|---|---|
|  | REF | EXTRAIT SEC (en %) |  | FILM/METAL | | | FILM/FILM | |  |  |
|  |  |  |  | $\mu$s | $\mu$d | $\mu$k | $\mu$s | $\mu$d |  |  |
| 10 | L1 | 20 | 1 | 0,32 | 0,3 | 0,32 | 0,7 | 0,47 | 0,1 | très bonne |
| 11 | L1 | 20 | 4 | 0,32 | 0,3 | 0,3 | 0,62 | 0,43 | 0,1 | très bonne |
| 12 | L3 | 20 | 1 | 0,3 | 0,25 | 0,34 | 0,65 | 0,47 | 0,1 | très bonne |
| 13 | L3 | 20 | 4 | 0,25 | 0,2 | 0,2 | 0,56 | 0,46 | 0,1 | très bonne |
| 14 | L2 | 20 | 4 | 0,5 | 0,45 | 0,4 | 0,59 | 0,48 | 0,1 | très bonne |

EXEMPLE 15

En opérant comme à l'exemple 1 on a préparé un film composite aprèsavoir remplacé le polymère modifié par un polymère P6 de Tg(A) 40°C réticulé par la N-méthylméthacrylamide. Ce polymère présentait la composition pondérale suivante :

| - MAM | 53 |
| - ABu | 20 |
| - AMA | 2 |
| - NMMA | 5 |
| - CPS | 20 |

Le latex utilisé avait une concentration en extrait sec de 20 % en poids.

Le film composite obtenu présentait les propriétés suivantes :

- $\mu$s 0,4 Film/métal

- $\mu$d 0,4 Film/métal résistance à l'abrasion : bonne ;

EXEMPLE 16 à 19

En opérant comme à l'exemple 1 on a préparé une série de polymères modifiés P7 à P10 qui différent par la composition de leur partie acrylique et leur Tg(A). Le copolyester sulfoné qui présente une Tg à 65 % de HR de 30°C a la composition suivante :

| motifs téréphtalates | 68,6 % en moles |
| motifs isophtalates | 17,15 % en moles |
| motifs sulfo-5isophtalates | 14,25 % en moles |
| motifs éthylèneglycol | 12,3 % en poids |
| motifs diéthylèneglycol | 16,52 % en poids |
| motifs triéthylèneglycol | 8,5 % en poids |
| motifs tétraéthylèneglycol | 3,3 % en poids |

La composition et la Tg(A) des polymères P7 à P10 figurent dans le tableau suivant :

| Polymères | AVM | AMA | AEt | MAM | DiMAEG(1) | CPS | Tg |
|---|---|---|---|---|---|---|---|
| P7 | 0% | 1% | 27% | 40% | 0,69% | 31% | 42 |
| P8 | 0% | 9% | 19,5% | 40% | 0,69% | 31% | 65 |
| P9 | 0% | 9% | 31,3% | 31% | 4,8% | 31% | 40 |
| P10 | 4% | 9% | 31,4% | 24% | 0,69% | 31% | 37 |

(1) diméthacrylate d'éthylèneglycol

En utilisant le procédé d'enduction en ligne décrit à l'exemple 6, on a préparé une série de films composites CP7 à CP10 par dépôt sur une face du film PET exempt de charge de l'exemple 6 de latex aqueux ayant une teneur en extrait sec de 20 % en poids et contenant 1 % en poids par rapport à l'extrait sec de nonylphénoléthoxylé (25 motifs éthoxy) partiellement sulfaté et pris sous forme de sel d'ammonium.

Les films composites obtenus présentent les propriétés figurant dans le tableau suivant :

| EX | Films | $\mu$s | $\mu$d | $\mu$k | Ra | Résistance à l'abrasion | Bobinabilité |
|----|-------|------|------|------|------|------------------------|--------------|
| 16 | CP7 | 0,4 | 0,39 | 0,42 | <0,01 | très bonne | très bonne |
| 17 | CP8 | 0,35 | 0,32 | 0,37 | <0,01 | très bonne | très bonne |
| 18 | CP9 | 0,45 | 0,42 | 0,5 | <0,01 | très bonne | très bonne |
| 19 | CP10 | 0,45 | 0,43 | 0,5 | <0,01 | bonne | bonne |

EXEMPLE 20

En opérant comme à l'exemple 1 on a préparé un film composite par dépôt sur une face du film PET exempt de charge de l'exemple 1 un polymère modifié de Tg(A) 40°C, préparé selon le procédé de l'exemple 1 à partir d'un copolyester sulfoné ayant une Tg à HR 65 % de 17°C et répondant à la composition suivante :

| motifs téréphtalates | 70,25 % en moles |
|---|---|
| motifs isophtalates | 17,65 % en moles |
| motifs sulfo-5isophtalates | 11,75 % en moles |
| motifs éthylèneglycol | 0 % en poids |
| motifs diéthylèneglycol | 39 % en poids |
| motifs triéthylèneglycol | 0 % en poids |
| motifs tétraéthylèneglycol | 0 % en poids |

Le polymère modifié a la composition suivante :

| - MAM | 56 % en poids |
|---|---|
| - ABu | 22 % en poids |
| - AMA | 2 % en poids |
| - CPS | 20 % en poids |

Le film composite obtenu présente les coefficients de frottement film/métal suivants :
- $\mu$s = 0,5
- $\mu$d = 0,43 et une bonne résistance à l'abrasion.

**Revendications**

1 - Procédé d'obtention de films polyester composites constitués par un film polyester orienté dont l'une au moins des faces comporte un revêtement destiné à lui conférer un bon glissant et une bonne résistance à l'abrasion, caractérisé en ce que l'on dépose sur un film polyester orienté, exempt de particules minérales, présentant une rugosité Ra inférieure ou égale à 0,01 $\mu$m un revêtement constitué par un polymère modifié obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy de formule générale :

$(-SO_3-)_n M$ (I)

dans laquelle :
- n est égal à 1 ou 2
- M représente un atome d'hydrogène, un métal alcalin ou alcalino-terreux, un cation ammonium, un cation

16

ammonium quaternaire.

2 - Procédé d'obtention de films polyester composites selon la revendication 1 présentant des coefficients de frottement film/métal inférieurs ou égaux à 0,5.

3 - Procédé d'obtention de films polyester composites selon l'une quelconque des revendications 1 à 2 caractérisé en ce que le film polyester orienté support est consitué par un polymère comportant au moins 80 % en moles de motifs dérivés d'au moins un acide aromatique dicarboxylique et d'éthylène glycol.

4 - Procédé d'obtention de films polyester composites selon la revendication 3 caractérisé en ce que le film polyester orienté support est constitué par un polymère comportant au moins 80 % en moles de motifs téréphtalate d'éthylèneglycol ou naphtalène-dicarboxylate d'éthylèneglycol.

5 - Procédé d'obtention de films polyester composites selon l'une quelconque des revendications 1 à 4 caractérisé en ce que le film polyester orienté support à une épaisseur inférieure ou égale à 40 $\mu$m.

6 - Procédé d'obtention de films polyester composites selon l'une quelconque des revendications 1 à 5 caractérisé en ce que le polyester dissipable mis en oeuvre est un copolyester comportant une pluralité de motifs dérivés d'au moins deux acides dicarboxyliques dont l'un comporte au moins un groupe sulfonyloxy dans sa molécule et une pluralité de motifs dérivés d'au moins un diol aliphatique.

7 - Procédé d'obtention de films polyester composites selon l'une quelconque des revendications 1 à 6 caractérisé en ce que le nombre de motifs dérivés d'un acide dicarboxylique à groupe sulfonyloxy pour un total de 100 motifs dérivés d'acides dicarboxyliques est de 4 à 30.

8 - Procédé d'obtention de films polyester composites selon l'une quelconque des revendications 1 à 7 caractérisé en ce que le polyester dissipable est un copolyester comportant une pluralité de motifs dérivés d'au moins un acide dicarboxylique non sulfoné pris dans le groupe des acides téréphtalique, isophtalique et phtalique.

9 - Procédé d'obtention de films polyester composites selon l'une quelconque des revendications 1 à 8 caractérisé en ce que le polyester dissipable est un copolyester comportant une pluralité de motifs dérivés des acides téré et isophtaliques.

10 - Procédé d'obtention de films polyester composites selon la revendication 9 caractérisé en ce que le polyester dissipable est un copolyester dans lequel le nombre des motifs téréphtalate représente de 20 à 99 % du nombre total des motifs téréphtalate et isophtalate.

11 - Procédé d'obtention de films polyester composites selon l'une quelconque des revendications 1 à 10 caractérisé en ce que le polyester dissipable dans l'eau comporte une pluralité de motifs dérivés de l'acide sulfo-5 isophtalique.

12 - Procédé d'obtention de films polyester composites selon l'une quelconque des revendications 1 à 11 caractérisé en ce que le polyester dissipable comporte une pluralité de motifs dérivés d'au moins un diol aliphatique pris dans le groupe de l'éthylèneglycol et de ses oligomères de formule HO-(CH$_2$-CH$_2$-O-)$_n$ H dans laquelle n est un nombre entier de 2 à 10.

13 - Procédé d'obtention de films polyester composites selon l'une quelconque des revendications 1 à 12 caractérisé en ce que le monomère de nature acrylique répond à la formule générale :

$$CH_2 = \overset{\overset{\displaystyle R}{|}}{C} -Y \qquad (II)$$

dans laquelle :
- R représente un atome d'hydrogène ou un groupe alkyle inférieur, éventuellement substitué par un groupe hydroxyle ;
- Y représente un groupe fonctionnel hydroxycarbonyle ; alkoxycarbonyle de formule -COOR$_1$ dans lequel R$_1$ est un radical alkyle comportant de 1 à 20 atomes de carbone, linéaire ou ramifié (éventuellement substitué par un reste hydroxyle); nitrile; amide de formule -CON(R$_2$,R3) dans laquelle R$_2$ et R$_3$, identiques ou différents représentent un atome d'hydrogène ou un reste alkyle linéaire ou ramifié, comportant de 1 à 20 atomes de carbone.

14 - Procédé d'obtention de films polyester composites selon l'une quelconque des revendications 1 à 13 caractérisé en ce que le monomère acrylique est pris dans le groupe formé par les acrylate et méthacrylate de méthyle, les acrylate et méthacrylate d'éthyle, les acides acrylique et méthacrylique, les acrylamide et méthacrylamide.

15 - Procédé d'obtention de films polyester composites selon l'une quelconque des revendications 1 à 14 caractérisé en ce qu'une quantité mineure d'un ou plusieurs monomères éthyléniques non acryliques sont associés au monomère acrylique.

16 - Procédé d'obtention de films polyester composites selon l'une quelconque des revendications 1 à 15 caractérisé en ce qu'on associe au moins un monomère réticulant aux monomères acryliques de formule (II).

17 - Procédé d'obtention de films polyester composites selon la revendication 16 caractérisé en ce que

17

la quantité de monomère réticulant représente jusqu'à 5 % en moles du monomère acrylique de formule (II).

18 - Procédé d'obtention de films polyester composites selon la revendication 16 caractérisé en ce que le monomère réticulant est un monomère polyéthylénique.

19 - Procédé d'obtention de films polyester composites selon la revendication 16 caractérisé en ce que le monomère réticulant est une hydroxyalkyl(méth) acrylamide.

20 - Procédé d'obtention de films polyester composites selon l'une quelconque des revendications 1 à 19 caractérisé en ce que le polymère modifié contient de 0,1 à 15 % en poids d'au moins un agent réticulant externe pris dans le groupe formé par les résines formophénoliques et les résines amines-formol.

21 - Procédé d'obtention de films polyester composites selon l'une quelconque des revendications 1 à 20 caractérisé en ce que la partie acrylique du polymère modifié présente une température de transition vitreuse comprise entre 0 et 100°C.

22 - Procédé d'obtention de films polyester composites selon l'une quelconque des revendications 1 à 21 caractérisé en ce que le polymère modifié contient jusqu'à 8 % en poids de charges polymères sensiblement sphériques de diamètre moyen inférieur à 0,2 $\mu$m.

23 - Procédé d'obtention de films polyester composites selon l'une quelconque des revendications 1 à 22 caractérisé en ce que la couche de revêtement en polymère modifié a une épaisseur comprise entre 0,05 et 1 $\mu$m.

24 - Procédé d'obtention de films polyester composites selon l'une quelconque des revendications 1 à 23 caractérisé en ce que la teneur pondérale du polymère modifié en copolyester à groupes sulfonyloxy est comprise entre 5 et 60 %.

25 - Procédé d'obtention de films polyester composites selon l'une quelconque des revendications 1 à 24 caractérisé en ce que le polymère modifié présente une partie acrylique ayant une Tg supérieure ou égale à 20°C et une teneur en copolyester à groupes sulfonyloxy d'au moins 20 % en poids.

26 - Procédé d'obtention de films polyester composites selon l'une quelconque des revendications 1 à 24 caractérisé en ce que le polymère modifié est constitué par une partie acrylique ayant une Tg inférieure à 20°C et contient des charges polymères.

27 - Procédé d'obtention de films polyester composites selon l'une quelconque des revendications 1 à 26 caractérisé en ce que l'on procède à l'enduction d'au moins une face d'un film polyester orienté support au moyen d'une composition aqueuse de polymère modifié.

28 - Procédé d'obtention de films composites selon la revendication 27 caractérisé en ce que le polymère modifié est mis en oeuvre sous forme d'une dispersion aqueuse.

29 - Procédé d'obtention de films composites selon la revendication 27 caractérisé en ce que le polymère modifié est mis en oeuvre sous forme d'une solution aqueuse obtenue par neutralisation à l'aide d'une base alcaline des groupes acides carboxyliques libres présents dans le polymère modifié de la dispersion aqueuse.

30 - Procédé d'obtention de films composites selon la revendication 27 caractérisé en ce que l'enduction du film polyester orienté support est réalisée avant tout étirage ou entre deux étirages du film support.

31 - Procédé d'obtention d'un matériau d'enregistrement magnétique comprenant un film polyester orienté, un revêtement magnétique et, sur au moins une de ses faces, un revêtement destiné à conférer à l'ensemble un bon glissant et une bonne résistance à l'abrasion, caractérisé en ce que le film polyester présente une rugosité Ra inférieure ou égale à 0,01 $\mu$m et que le revêtement est constitué par un polymère modifié selon l'une quelconque des revendications 1 à 27, obtenu par polymérisation radicalaire en phase aqueuse d'au moins un monomère de nature acrylique en présence d'une quantité efficace d'un polyester dissipable dans l'eau, dérivé d'au moins un acide aromatique dicarboxylique et d'au moins un diol aliphatique et comportant une pluralité de groupes sulfonyloxy de formule générale :

$(-SO_3-)_nM$     (I)

dans laquelle :
- n est égal à 1 ou 2
- M représente un atome d'hydrogène, un métal alcalin ou alcalino-terreux, un cation ammonium, un cation ammonium quaternaire.

32 - Procédé d'obtention d'un matériau d'enregistrement magnétique selon la revendication 31 caractérisé en ce que la couche magnétique déposée par évaporation ou métallisation ionique présente une épaisseure inférieure à 0,2 $\mu$m.

18